# EUROPÄISCHE PATENTANMELDUNG

(11) **EP 2 141 480 A2**
(43) Veröffentlichungstag der Anmeldung: **06.01.2010**
(21) Anmeldenummer: 09007932.8
(22) Anmeldetag: 17.06.2009
(51) Int. Cl.: G01N 3/00

(54) **Prüverfahren und Prüfanlage für Spreizanker**

(30) Priorität: 03.07.2008 DE 102008031590
(71) Anmelder: fischerwerke GmbH & Co. KG, 72178 Waldachtal (DE)
(72) Erfinder: Huss, Rainer, 72285 Pfalzgrafenweiler (DE); Hofmann, Jan, 72280 Dornstetten (DE); Heinze, Andreas, 07426 Egelsdorf (DE)

(57) **Zusammenfassung**

Die Erfindung betrifft ein Prüfverfahren und eine Prüfanlage (1) zur Untersuchung des Nachspreizverhaltens eines Spreizankers (2). Die Prüfanlage (1) weist eine Zugeinrichtung (4) auf, mit der der Spreizanker (2) dynamisch beaufschlagbar ist, und eine Spanneinrichtung (3) mit Spannbacken (9), die sich bei Erhöhung der auf den Spreizanker (2) ausgeübten Zugkraft auseinander- und bei einer Verringerung der Zugkraft zusammenbewegen. Dadurch wird eine Bohrlochaufweitung und -verengung simuliert. Gemessen wird die Relativbewegung eines Spreizkonus (7) des Spreizankers (2) in einer Spreizhülse (6) bei der dynamischen Beaufschlagung.

## Beschreibung

Die Erfindung betrifft ein Prüfverfahren und eine Prüfanlage für Spreizanker mit den Merkmalen der Oberbegriffe der unabhängigen Ansprüche.

Ein Spreizanker weist einen meist, jedoch nicht zwingend, konischen Spreizkörper und eine Spreizhülse auf, die durch Aufschieben auf den Spreizkörper aufspreizbar ist. Das Aufschieben der Spreizhülse auf den Spreizkörper ist als Relativbewegung zu verstehen, es ist gleichbedeutend mit einem Einziehen des Spreizkörpers in die Spreizhülse. Üblicherweise weist der Spreizkörper einen Schaft auf, der mit ihm einstückig ist oder auf den der Spreizkörper geschraubt ist.

Derartige Spreizanker werden in Bohrlöcher in beispielsweise Beton als Ankergrund eingebracht und durch Einziehen des Spreizkörpers am Ankerschaft in die Spreizhülse aufgespreizt und dadurch im Bohrloch verankert. Das Bohrloch kann hinterschnitten oder nicht-hinterschnitten sein. An dem aus dem Bohrloch vorstehenden Ankerschaft lässt sich ein Bauteil befestigen.

Es kann ein Ankerverhalten eines derartigen, in einem Bohrloch verankerten Spreizankers bei zwei Arten dynamischer Belastungen untersucht werden, wobei weitere Belastungsarten nicht ausgeschlossen sind: zum Einen kann der verankerte Spreizanker mit einer dynamischen Last in einer Ausziehrichtung beaufschlagt werden, wobei die Ausziehrichtung des Spreizankers aus dem Bohrloch mit der Einziehrichtung des Spreizkörpers in die Spreizhülse zum Aufspreizen übereinstimmt. Der Kraftverlauf wird vielfach regelmäßig, beispielsweise sinusförmig sein, ist aber grundsätzlich beliebig, kann also auch unregelmäßig oder zufällig sein. Die andere Untersuchungsart ist eine Bohrlocherweiterung beispielsweise infolge einer Rissbildung im Ankergrund, insbesondere eine sich ändernde Bohrlocherweiterung. Zu dieser Art der Untersuchung wird der Spreizanker in einem Bohrloch in beispielsweise Beton aufgespreizt, wobei der Beton einen das Bohrloch durchsetzenden Riss aufweist. Der Beton wird quer zum Riss auseinander gezogen und/oder zusammengespannt, so dass sich das Bohrloch dynamisch erweitert und wieder verengt. Die Erweiterung ist so gering, dass der aufgespreizte Spreizanker im Bohrloch verankert bleibt. Die Bohrlocherweiterung und -verengung kann ebenfalls regelmäßig, beispielsweise sinusförmig, oder auch unregelmäßig oder zufällig erfolgen. Der Spreizanker wird mit einer Kraft in Ausziehrichtung beaufschlagt. Üblich ist entweder eine dynamische Belastung des Spreizankers oder eine dynamische Bohrlocherweiterung, eine Kombination beider Belastungen ist nicht ausgeschlossen.

Bei solchen dynamischen Prüfungen wird normalerweise die Relativbewegung des Spreizkörpers zur Spreizhülse gemessen. Ein Problem dabei ist eine Relativbewegung, also ein Schlupf der Spreizhülse im Beton, die das Messergebnis verfälscht. Es ist normalerweise nicht feststellbar, ob sich der Spreizkörper in der Spreizhülse oder die Spreizhülse im Bohrloch bewegt hat oder eine Kombination von beidem. Eine Wegmessung direkt an der Spreizhülse ist kaum möglich, weil die Spreizhülse im Bohrloch unzugänglich ist.

Aufgabe der Erfindung ist, ein Prüfverfahren und eine Prüfanlage für einen Spreizanker vorzuschlagen, die eine Messung des Relativwegs des Spreizkörpers des Spreizankers in der Spreizhülse bei Belastung, insbesondere dynamischer Belastung und/oder einer Bohrlocherweiterung, insbesondere einer dynamischen Bohrlocherweiterung, ermöglicht und Schlupf der Spreizhülse im Ankergrund vollständig oder jedenfalls weitestgehend vermeidet. Dabei soll die Spreizhülse möglichst realitätsnah wie in einem Bohrloch in beispielsweise Beton gehalten und abgestützt sein.

Diese Aufgabe wird durch die Merkmale der unabhängigen Ansprüche gelöst. Dazu schlägt das erfindungsgemäße Prüfverfahren vor, die Spreizhülse eines Spreizankers mit Spannbacken vergleichbar einer Spannzange einzuspannen und eine Kraft in der Ausziehrichtung auf den Spreizkörper auszuüben. Die Spannbacken werden dynamisch, regelmäßig oder unregelmäßig auseinander- und zusammenbewegt, wobei die Spannbacken nur soweit auseinander bewegt werden, dass die Spreizhülse zwischen ihnen eingespannt bleibt und nicht durch die auf den Spreizkörper ausgeübte Kraft in Ausziehrichtung aus den Spannbacken freikommt. Das Auseinander- und Zusammenbewegen der Spannbacken simuliert einen sich dynamisch aufweitenden und verengenden Schlitz bzw. ein sich dynamisch aufweitendes und verengendes Bohrloch. Durch das Einspannen der Spreizhülse des Spreizankers in Spannbacken wird ein Schlupf zwischen der Spreizhülse und den Spannbacken idealerweise zu Null, so dass eine Relativbewegung ausschließlich zwischen dem Spreizkörper und der Spreizhülse des Spreizankers stattfindet. Die Spannbacken halten die Spreizhülse und stützen sie von außen ab, vergleichbar mit der Verankerung in einem Bohrloch, wodurch eine realitätsnahe Halterung der Spreizhülse, vergleichbar ihrer Verankerung durch Aufspreizen in einem Bohrloch, gegeben ist.

Die Erfindung hat den Vorteil, dass Schlupf zwischen der Spreizhülse und ihrer Einspannung zwischen den Spannbacken weitestgehend eliminiert ist und eine Relativbewegung nahezu ausschließlich zwischen dem Spreizkörper und der Spreizhülse des Spreizankers stattfindet. Dadurch ist eine gute Beurteilung eines Nachspreizverhaltens des Spreizankers möglich. Es lässt sich der Einfluss verschiedener Reibpaarungen prüfen, also beispielsweise einer Spreizhülse und/oder eines Spreizankers aus Baustahl oder nicht-rostendem Stahl und Gleitbeschichtungen. Die Ergebnisse sind übertragbar auf die Verankerung in Beton, wodurch sich die Anzahl notwendiger Versuche der Verankerung in Beton u.U. auf einen Bruchteil reduziert. Auch andere Einflussfaktoren wie beispielsweise die Geometrie des Spreizankers, also beispielsweise ein Konuswinkel seines Spreizkörpers, lassen sich vergleichend untersuchen und auf die Verankerung in Beton übertragen. Das Nachspreizverhalten und die Eignung eines Spreizankers für die Verankerung in einem Bohrloch, das sich dynamisch erweitert, lassen sich abschätzen.

Ein Vorteil der Erfindung ist der Verzicht auf Beton als Ankergrund für die Untersuchung, solche Versuche sind aufwendig und bringen einen erheblichen Verbrauch an Beton mit sich. Die Untersuchung mit dem erfindungsgemäßen Prüfverfahren und der erfindungsgemäßen Prüfanlage verringern den Untersuchungsaufwand erheblich.

Eine Ausgestaltung der Erfindung sieht vor, die Relativbewegung der Spreizhülse in Bezug auf den Spreizkörper zu messen, wobei anstelle einer Messung unmittelbar an der Spreizhülse mittelbar an den Spannbacken gemessen wird.

Zur Prüfung kann eine konstante Kraft in Ausziehrichtung auf den Spreizkörper ausgeübt und die Spannbacken dynamisch auseinander- und zusammenbewegt werden. Eine Ausgestaltung der Erfindung sieht eine dynamische Beaufschlagung des Spreizkörpers und ein dazu synchrones Auseinander- und Zusammenbewegen der Spannbacken vor. Dabei bedeutet "synchron" ein zeitlich auf die Kraftänderung abgestimmtes Auseinander- und Zusammenbewegen der Spannbacken, wobei die Abhängigkeit der Bewegung der Spannbacken von der Kraftänderung proportional sein kann, allerdings nicht proportional sein muss. Grundsätzlich ist eine beliebige Abhängigkeit denkbar. Auch können eine dynamische Kraftbeaufschlagung des Spreizkörpers und ein dynamisches Auseinander- und Zusammenbewegen der Spannbacken kombiniert werden.

Die Kraftbeaufschlagung erfolgt vorzugsweise hydraulisch, es ist allerdings auch eine pneumatische oder mechanische bzw. elektromechanische Beaufschlagung beispielsweise mittels eines Gewindetriebs und eines Elektromotors möglich. Die Aufzählung ist nicht abschließend.

Die erfindungsgemäße Prüfanlage mit den Merkmalen des nebengeordneten Anspruchs weist Spannbacken auf, zwischen denen die Spreizhülse eines Spreizankers einspannbar ist und die auseinander- und zusammenbewegbar sind, um eine dynamische Bohrlocherweiterung zu simulieren. Des Weiteren weist die Prüfanlage eine Zugeinrichtung auf, mit der eine Kraft in der Ausziehrichtung auf den Spreizkörper des Spreizankers ausübbar ist, wobei diese Kraft auch eine auf den Spreizkörper des Spreizankers ausgeübte Druckkraft sein kann. Des Weiteren ist eine Synchronisation vorgesehen, die bei einer Änderung der auf den Spreizkörper ausgeübten Kraft die Spannbacken auseinander- und zusammenbewegt. "Synchronisation" bedeutet, wie bereits erläutert, eine zeitlich auf den Kraftverlauf abgestimmte Bewegung der Spannbacken auseinander und zusammen, insbesondere bewegen sich die Spannbacken bei einer Erhöhung der auf den Spreizkörper ausgeübten Kraft auseinander und bei einer Verringerung der Kraft zusammen. Die Abhängigkeit der Bewegung der Spannbacken vom Kraftverlauf kann, muss aber nicht, proportional sein, ist allerdings grundsätzlich beliebig. Die Synchronisation kann in beiden Richtungen erfolgen, es kann also die auf den Spreizkörper in Ausziehrichtung ausgeübte Kraft dynamisch geändert werden und die Spannbacken sich in Abhängigkeit von der Kraft auseinander- und zusammenbewegen. Die Beaufschlagung des Spreizkörpers des Spreizankers kann auch weggesteuert in seiner Ausziehrichtung und entgegengesetzt erfolgen. Umgekehrt können auch die Spannbacken dynamisch auseinander- und zusammenbewegt werden und die auf den Spreizanker ausgeübte Kraft bzw. seine Bewegung in und entgegen der Ausziehrichtung von der Bewegung der Spannbacken abhängig sein.

Die Synchronisation der Kraftbeaufschlagung des Spreizkörpers des Spreizankers und der Bewegung der Spannbacken ist in verschiedener Weise möglich, beispielsweise ist eine hydraulische und/oder eine elektronische Synchronisation möglich. Vorzugsweise erfolgt die Synchronisation mechanisch. Dazu sieht eine Ausgestaltung der Erfindung eine Spannbackenführung vor, die die Spannbacken in der Ausziehrichtung des Spreizankers und zugleich nach außen beweglich und umgekehrt führt. Es kann sich dabei um eine gerade oder auch gekrümmte Schiebeführung handeln, beispielsweise ist auch eine verschiebbare Führung der Spannbacken in einem Innenkonus vergleichbar einer Spannzange möglich. Auch mit einer Hebel-, beispielsweise einer Parallelogrammführung, ist die gewünschte Spannbackenführung in der Ausziehrichtung und zugleich nach außen beweglich und umgekehrt möglich. Des Weiteren ist eine Abstützung vorgesehen, die die Spannbacken gegen eine Bewegung in der Ausziehrichtung des Spreizankers abstützt, wozu die Spannbacken auch auf Zug gehalten sein können. Die Abstützung ist nicht starr, sondern lässt eine Bewegung in der Ausziehrichtung des Spreizankers zu, die abhängig von der Kraft ist, welche die Zugeinrichtung der Synchronisation der erfindungsgemäßen Prüfanlage auf den Spreizkörper des Spreizankers ausübt. Mit der Bewegung in der Ausziehrichtung geht eine Bewegung der Spannbacken auseinander einher. Dies bedeutet, wenn sich die auf den Spreizanker ausgeübte Kraft in der Ausziehrichtung erhöht bzw. der Spreizanker in der Ausziehrichtung bewegt, bewegen sich die Spannbacken einen verkürzten Weg in Ausziehrichtung mit und dabei auseinander. Verkürzt ist der Ausziehweg der Spannbacken gegenüber der Bewegung des Spreizankers durch die Abstützung der Spannbacken. Die Spreizhülse des Spreizankers ist idealerweise unbeweglich in den Spannbacken eingespannt, bewegt sich also mit diesen mit.

Eine Ausgestaltung der Erfindung sieht ein oder mehrere Federelemente vor, über die die Abstützung die Spannbacken gegen die von der Zugeinrichtung auf den Spreizanker ausgeübte Kraft abstützt.

Vorzugsweise umschließen die Spannbacken die eingespannte Spreizhülse auf dem gesamten Umfang, unterbrochen nur durch Spalte zwischen den Spannbacken, die sich beim Auseinanderbewegen der Spannbacken vergrößern und beim Zusammenbewegen verkleinern, im Extremfall auf Null. Dadurch ist die Spreizhülse des Spreizankers realitätsnah wie in einem Bohrloch in Beton gehalten und von außen abgestützt. Das ist Voraussetzung, um von den Prüfergebnissen der erfindungsgemäßen Prüfanlage auf das Verhalten des Spreizankers in Beton zu schließen.

Spannflächen der Spannbacken sind vorzugsweise aufgeraut, weisen beispielsweise eine umlaufende Rillung, einen Rändel oder eine in sonstiger Weise hergestellte Aufrauung auf, um Schlupf zwischen der Spreizhülse des Spreizankers und den Spannbacken zu vermeiden. Mit "Spannflächen" sind die nach innen gerichteten Flächen der Spannbacken gemeint, mit denen sie an der eingespannten Spreizhülse anliegen.

Die Erfindung wird nachfolgend anhand eines in der Zeichnung dargestellten Ausführungsbeispiels näher erläutert. Die einzige Figur zeigt einen schematisierten Achsschnitt einer erfindungsgemäßen Prüfanlage. Die Zeichnung ist als vereinfachte Darstellung zum Verständnis und zur Erläuterung der Erfindung zu verstehen.

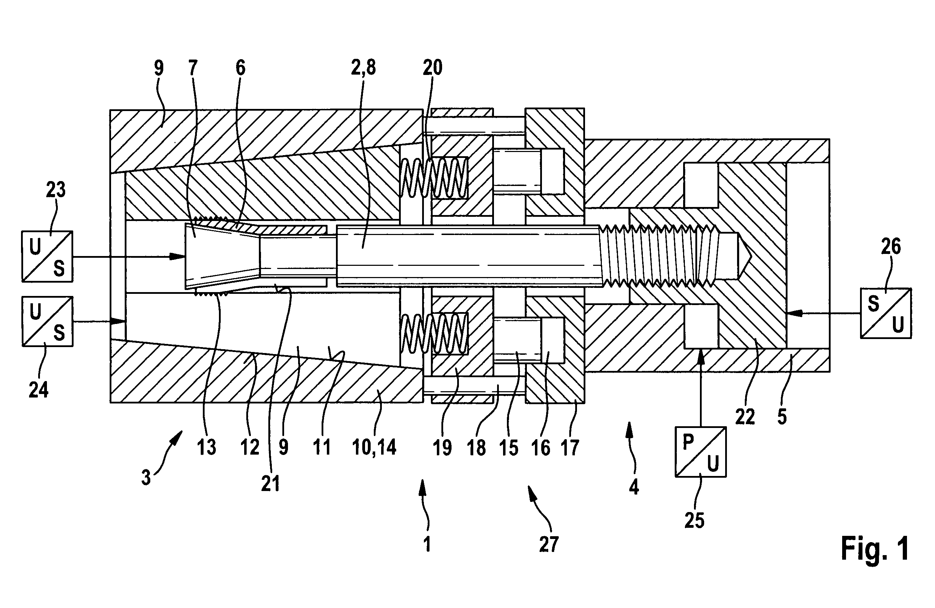

Die in Figur 1 dargestellte, insgesamt mit 1 bezeichnete erfindungsgemäße Prüfanlage für einen Spreizanker 2 weist eine Spanneinrichtung 3 und eine Zugeinrichtung 4 mit einem Hydraulikzylinder 5 auf (hydraulische Anschlüsse sind nicht dargestellt). Die Prüfanlage 1 dient zum Messen einer Relativbewegung einer Spreizhülse 6 des Spreizankers 2 auf einem Spreizkörper des Spreizankers 2, der hier ein Spreizkonus 7 ist. Der Spreizkonus 7 ist einstückig mit einem Ankerschaft 8, er verjüngt sich in Richtung des Ankerschafts 8. Durch Aufschieben der geschlitzten Spreizhülse 6 auf den Spreizkonus 7 oder umgekehrt durch Einziehen des Spreizkonus 7 in die Spreizhülse 6 wird die Spreizhülse 6 aufgespreizt, um den Spreizanker 2 in einem nicht dargestellten Bohrloch in Beton, Mauerwerk oder dgl. zu verankern. Dies ist an sich bekannt und soll hier nicht näher erläutert werden. Der dargestellte Spreizanker 2 ist für nichthinterschnittene Bohrlöcher vorgesehen, die Prüfanlage 1 eignet sich allerdings ebenso für Spreizanker für hinterschnittene Bohrlöcher.

Die Spanneinrichtung 3 ist nach Art einer Spannzange ausgebildet, sie weist drei Spannbacken 9 auf, die in einer Spannbackenaufnahme 10 aufgenommen sind. Die Spannbackenaufnahme 10 ist ein stabiles Rohr mit einem Innenkonus 11, der sich in Richtung der Zugeinrichtung 4 erweitert. Die Spannbacken 9 weisen Außenkegelflächen 12 passend zum Innenkonus 11 der Spannbackenaufnahme 10 an ihrem Außenumfang auf. Am Innenumfang weisen die Spannbacken 9 zylindrische Spannflächen 21 passend zur Spreizhülse 6 des Spreizankers 2 auf. Die Spannbacken 9 sind wechselbar zur Anpassung an unterschiedliche Ankerdurchmesser und Ankergeometrien. Für einen Spreizanker für ein hinterschnittenes Bohrloch, dessen Spreizhülse sich beim Aufspreizen beispielsweise konisch aufweitet, hätten die Spannbacken 9 eine passende, also ebenfalls konische Ausnehmung an ihren Spannflächen 21 am Innenumfang, die der Hinterschneidung eines Bohrlochs entspricht, für die der Spreizanker vorgesehen ist (nicht dargestellt). Die Spannflächen 21 der Spannbacken 9 weisen eine Aufrauung 13 in dem Bereich auf, in dem sich der aufgespreizte Teil der Spreizhülse 6 befindet. Im Ausführungsbeispiel ist die Aufrauung 13 eine umlaufende Rillung, sie kann allerdings auch als Rändel, beispielsweise als Kreuzrändel oder in anderer Weise, auch unregelmäßig ausgebildet sein. Die Aufrauung 13 hat den Zweck, eine Verschiebung der Spreizhülse 6 gegenüber den Spannbacken 9 bei einer Zugbeaufschlagung des Spreizankers 2 zu verhindern.

In Umfangsrichtung umschließen die Spannbacken 9 die Spreizhülse 6 nahezu vollständig, unterbrochen nur durch Spalte zwischen den einzelnen Spannbacken 9. Sind die Spannbacken 9 vollständig zusammenbewegt, sind die Spalte geschlossen und die Spannbacken 9 umschließen die Spreizhülse 6 vollständig. Werden die Spannbacken 9 auseinander bewegt, öffnen sich die Spalte zwischen ihnen und unterbrechen die Umschließung der Spreizhülse 6. Im dargestellten Ausführungsbeispiel der Erfindung sind drei Spannbacken 9 vorgesehen, von denen sich jede über einen Umfangswinkel von 120°, evtl. abzüglich des Spalts zur benachbarten Spannbacke 9, erstreckt.

Die Spannbackenaufnahme 10 mit dem Innenkonus 11 bildet eine Spannbackenführung 14, die die Spannbacken 9 bei einer Verschiebung in axialer Richtung zugleich auseinander- oder zusammenbewegt; bei einer Bewegung in Richtung der Zugeinrichtung 4 bewegen sich die Spannbacken 9 auseinander, in umgekehrter Richtung bewegen sie sich zusammen. Durch die Bewegung der Spannbacken 9 auseinander und zusammen wird eine dynamische Bohrlochaufweitung und -verengung simuliert.

Zum Einspannen der Spreizhülse 6 des Spreizankers 2 weist die Spanneinrichtung 3 der erfindungsgemäßen Prüfanlage 1 Kolben 15 auf, die in Zylinderbohrungen 16 einer Grundplatte 17 achsparallel zum Spreizanker 2 und zur Spannbackenaufnahme 10 verschiebbar sind. Die Grundplatte 17 ist mit Säulen 18 mit der Spannbackenaufnahme 10 verbunden, sie ist mit Abstand von einer der Zugeinrichtung 4 zugewandten Stirnseite der Spannbackenaufnahme 10 angeordnet. Die Kolben 15, die nachfolgend als Spannkolben 15 bezeichnet werden, beaufschlagen die Spannbacken 9 über eine Stützplatte 19 und Federelemente 20, die in Sacklöchern der Stützplatte 19 aufgenommen sind und gegen Stirnseiten der Spannbacken 9 drücken. Die Stützplatte 19 ist zwischen der Grundplatte 17 und der Spannbackenaufnahme 10 angeordnet und auf den Säulen 18 axial verschieblich geführt. Zum Spannen werden die Spannkolben 15 hydraulisch druckbeaufschlagt und verschieben die Stützplatte 19 in Richtung der Spannbackenaufnahme 10. Über die Federelemente 20 beaufschlagen die Spannkolben 15 die Spannbacken 9 in den sich verengenden Innenkonus 11 der Spannbackenaufnahme 10. Dadurch bewegen sich die Spannbacken 9 aufeinander zu, verengen die Spalte zwischen sich und spannen die Spreizhülse 6 des Spreizankers 2 zwischen sich fest. Zwischen dem Ankerschaft 8 und den Spannflächen 21 der Spannbacken 9 besteht ein Zwischenraum, der Ankerschaft 8 ist nicht festgespannt. Die Federelemente 20 ermöglichen eine Verschiebung der Spannbacken 9, die sich aufgrund des Innenkonus 11, der die Spannbackenführung 14 bildet, zugleich nach außen, d.h. auseinander- oder bei Verschiebung der Spannbacken 9 weg von der Zugeinrichtung 4 zusammenbewegen. Das Einspannen der Spreizhülse 6 des Spreizankers 2 kann beispielsweise auch pneumatisch, mechanisch durch Schrauben, elektromechanisch ebenfalls durch Schrauben und Antrieb mit einem Elektromotor, oder in anderer Weise erfolgen (nicht dargestellt).

Die Federelemente 20, die Stützplatte 19, die Spannkolben 15 und die Grundplatte 17 bilden eine Abstützung 27, die die Spannbacken 9 beweglich gegen die Zugkraft, die die Zugeinrichtung 4 auf den Ankerschaft 8 ausübt, abstützt. Eine Stützkraft ist abhängig von der Höhe der Zugkraft.

Der Zylinder 5 der Zugeinrichtung 4 ist auf die Grundplatte 17 aufgesetzt, in ihm ist ein Kolben 22 angeordnet, mit dem der Ankerschaft 8 des Spreizankers 2 verbindbar ist, beispielsweise mittels einer Schraubverbindung. Durch hydraulische Druckbeaufschlagung des Kolbens 22 wird der Spreizanker 2 an seinem Ankerschaft 8 mit einer Zugkraft beaufschlagt. Die Zugkraft wirkt in einer Ausziehrichtung des Spreizankers 2, also in einer Richtung aus einem Bohrloch, in welchem der Spreizanker 2 verankert ist, heraus. Die Ausziehrichtung ist zugleich eine Einziehrichtung des Spreizkonus 7 in die Spreizhülse 6 zum Aufspreizen der Spreizhülse 6. Die Kraftbeaufschlagung in Ausziehrichtung beaufschlagt über die zwischen den Spannbacken 9 eingespannte Spreizhülse 6 die Spannbacken 9 in Richtung des sich erweiternden Innenkonus 11 der Spannbackenaufnahme 10. Da die Spannbacken 9 über die Federelemente 20 abgestützt sind, bewegen sich die Spannbacken 9 bei einer Zugbeaufschlagung des Ankerschafts 8 in Richtung des sich aufweitenden Innenkonus 11. Das bedeutet, bei einer Erhöhung der auf den Ankerschaft 8 ausgeübten Zugkraft in Ausziehrichtung bewegen sich die Spannbacken 9 auseinander, das von ihnen simulierte Bohrloch weitet sich auf. Zugleich wird der Spreizkonus 7 weiter in die Spreizhülse 6 eingezogen und spreizt diese nach, so dass die Spreizhülse 6 zwischen den Spannbacken 9 eingespannt bleibt. Die Aufrauung 13 verhindert Schlupf der Spreizhülse 6 gegenüber den Spannbacken 9, eine Relativbewegung findet ausschließlich zwischen dem Spreizkonus 7 des Spreizankers 2 und seiner Spreizhülse 6 statt. Die Relativbewegung des Spreizkonus 7 gegenüber den Spannbacken 9 und damit gegenüber der Spreizhülse 6 wird mit zwei Wegsensoren 23, 24 gemessen, deren einer Wegsensor 23 den Weg des Spreizkonus 7 und deren anderer Wegsensor 24 den Weg der Spannbacken 9 misst. Mit einem Druckmesser 25 wird der den Kolben 22 der Zugeinrichtung 4 beaufschlagende hydraulische Druck gemessen, der zu der auf den Ankerschaft 8 ausgeübten Zugkraft proportional ist.

Wird die auf den Ankerschaft 8 ausgeübte Zugkraft verringert, verschieben die Federelemente 20 die Spannbacken 9 wieder tiefer in den enger werdenden Innenkonus 11 der Spannbackenaufnahme 10 hinein, so dass die Spannbacken 9 aufeinander zu bewegt werden; das von den Spannbacken 9 simulierte Bohrloch verengt sich.

Zu einer Untersuchung des Nachspreizverhaltens des Spreizankers 2 wird der Kolben 22 der Zugeinrichtung 4 mit einem sich dynamisch ändernden Druck beaufschlagt. Vorzugsweise erfolgt die Druckänderung regelmäßig, beispielsweise sinusförmig, es ist allerdings auch eine unregelmäßige Druckänderung möglich. Dadurch wird der Ankerschaft 8 mit einer dynamischen, dem Druckverlauf proportionalen Zugkraft in Ausziehrichtung beaufschlagt, wobei die Zugkraft vorzugsweise einen statischen Anteil und einen dynamischen Anteil aufweist, aber stets in der Ausziehrichtung wirkt. Gemessen werden der Weg des Spreizkonus 7 und der Spannbacken 9. Da sich die Spreizhülse 6 nicht gegenüber den Spannbacken 9 bewegt, ist der Weg der Spannbacken 9 zugleich auch der Weg der Spreizhülse 6. Mit der Prüfanlage 1 wird somit die Relativbewegung des Spreizkonus 7 gegenüber der Spreizhülse 6 bei dynamischer Zugbeaufschlagung des Ankerschafts 8 in Ausziehrichtung gemessen. Dabei bewegen sich die Spannbacken 9 wie beschrieben auseinander, wenn die Zugkraft erhöht wird, und zusammen, wenn sich die Zugkraft verringert. Es wird also eine dynamische Bohrlochaufweitung und -verengung simuliert.

Die Prüfanlage 1 weist eine Synchronisation der Bewegung der Spannbacken 9 und der Zugbeaufschlagung des Ankerschafts 8 auf, weil die auf den Ankerschaft 8 ausgeübte Zugkraft über die Spreizhülse 6 auf die Spannbacken 9 wirkt, die sich über die Federelemente 20 abstützen und sich deswegen über die Führung im Innenkonus 11 der Spannbackenaufnahme 10 bei Erhöhung der auf den Ankerschaft 8 ausgeübten Zugkraft auseinander und bei Verringerung der Zugkraft zusammenbewegen. Eine Abstützung der Spannbacken 9 über die Federelemente 20 an der Stützplatte 19 erfolgt in Abhängigkeit von der von der Zugeinrichtung 4 auf den Ankerschaft 8 ausgeübten Zugkraft in Ausziehrichtung.

Es ist auch eine weggesteuerte Messung möglich, wozu entweder der Weg des Spreizkonus 7 mit dem Wegsensor 23 gemessen oder ein zusätzlicher Wegsensor 26 beispielsweise am Kolben 22 der Zugeinrichtung 4 vorgesehen wird.

Mit den Spannkolben 15 kann auch die Einspannung der Spreizhülse 6 zwischen den Spannbacken 9 dynamisch verändert, d.h. die Spannbacken 9 können hin- und herverschoben werden, wobei sie sich aufgrund der Führung im Innenkonus 11 der Spannbackenaufnahme 10 zugleich auseinander- und zusammenbewegen. Für diesen Fall kann es vorteilhaft sein, die Spannbacken 9 starr anstatt über die Federelemente 20 an der Stützplatte 19 abzustützen (nicht dargestellt). Die von der Zugeinrichtung 4 auf den Ankerschaft 8 ausgeübte Zugkraft kann konstant oder ebenfalls dynamisch sein. Eine weitere Möglichkeit ist es, den die Spannkolben 15 beaufschlagenden Hydraulikdruck konstant zu halten. Auch in diesem Fall können sich die Spannbacken 9 starr anstatt über die Federelemente 20 an der Stützplatte 19 abstützen. Bei einer Änderung der auf den Ankerschaft 8 ausgeübten Zugkraft bewegen sich die Spannkolben 15, wenn sie mit konstantem hydraulischem Druck beaufschlagt sind, und mit ihnen bewegen sich die Spannbacken 9. In diesem Fall erfolgt die Zugbeaufschlagung des Ankerschafts 8 vorzugsweise weggesteuert.

Die von der Zugeinrichtung 4 auf den Ankerschaft 8 ausgeübte Zugkraft wird so begrenzt, dass die Spreizhülse 6 zwischen den Spannbacken 9 eingespannt bleibt. Ebenso wird die Auseinanderbewegung der Spannbacken 9 so beschränkt, dass die Spreizhülse 6 zwischen den Spannbacken 9 eingespannt bleibt, wenn die Spannbacken 9 mit den Spannkolben 15 bewegt werden. Eine Betonfestigkeit kann über die Federkonstante der Federelemente 20 und die Vorspannung, mit der die Federelemente 20 beaufschlagt werden, simuliert werden.

### Prüfverfahren und Prüfanlage für Spreizanker

- 1: Prüfanlage
- 2: Spreizanker
- 3: Spanneinrichtung
- 4: Zugeinrichtung
- 5: Hydraulikzylinder
- 6: Spreizhülse
- 7: Spreizkonus
- 8: Ankerschaft
- 9: Spannbacke
- 10: Spannbackenaufnahme
- 11: Innenkonus
- 12: Außenkegelfläche
- 13: Aufrauung
- 14: Spannbackenführung
- 15: Spannkolben
- 16: Zylinderbohrung
- 17: Grundplatte
- 18: Säule
- 19: Stützplatte
- 20: Federelement
- 21: Spannfläche
- 22: Kolben
- 23, 24, 26: Wegsensoren
- 25: Drucksensor
- 27: Abstützung

## Patentansprüche

1. Prüfverfahren für einen Spreizanker (2), der einen Spreizkörper (7) und eine Spreizhülse (6) aufweist, die durch Einziehen des Spreizkörpers (7) in die Spreizhülse (6) aufspreizbar ist, **dadurch gekennzeichnet, dass** die Spreizhülse (6) zwischen Spannbacken (9) eingespannt wird, dass eine Kraft in einer Ausziehrichtung auf den Spreizkörper (7) ausgeübt wird und dass die Spannbacken (9) auseinander- und zusammenbewegt werden, wobei die Spreizhülse (6) eingespannt bleibt.

2. Prüfverfahren nach Anspruch 1, **dadurch gekennzeichnet, dass** eine Relativbewegung der Spreizhülse (6) in Bezug auf den Spreizkörper (7) gemessen wird.

3. Prüfverfahren nach Anspruch 1, **dadurch gekennzeichnet, dass** eine sich zeitlich ändernde Kraft in Ausziehrichtung auf den Spreizkörper (7) ausgeübt wird und dass die Spannbacken (9) synchron zur Änderung der Kraft auseinander-und zusammenbewegt werden.

4. Prüfanlage für einen Spreizanker (2), mit Spannbacken (9), zwischen denen eine Spreizhülse (6) des Spreizankers (2) einspannbar ist, mit einer Zugeinrichtung (4), mit der eine Kraft in einer Ausziehrichtung auf den Spreizanker (2) ausübbar ist, und mit einer Synchronisation, die die Spannbacken (9) bei einer Änderung der auf den Spreizanker (2) ausgeübten Kraft auseinander- und zusammenbewegt.

5. Prüfanlage nach Anspruch 4, **dadurch gekennzeichnet, dass** die Synchronisation eine Spannbackenführung (14), die die Spannbacken (9) in der Ausziehrichtung des Spreizankers (2) und zugleich nach außen beweglich und umgekehrt führt, und eine Abstützung (27) aufweist, die die Spannbacken (9) gegen eine Bewegung in der Ausziehrichtung des Spreizankers (2) abstützt, wobei die Abstützung (27) der Spannbacken (9) in Abhängigkeit von der Kraft, die die Zugeinrichtung (4) auf den Spreizanker (2) ausübt, in der Ausziehrichtung des Spreizankers (2) beweglich ist.

6. Prüfanlage nach Anspruch 5, **dadurch gekennzeichnet, dass** die Abstützung (27) die Spannbacken (9) mit einem Federelement (20) abstützt.

7. Prüfanlage nach Anspruch 4, **dadurch gekennzeichnet, dass** sich Spannflächen (21) der Spannbacken (9) über nahezu 360° geteilt durch die Anzahl der Spannbacken (9) in Umfangsrichtung erstrecken.

8. Prüfanlage nach Anspruch 4, **dadurch gekennzeichnet, dass** die Spannbacken (9) aufgeraute Spannflächen (21) aufweisen.
